# EUROPEAN PATENT SPECIFICATION

(11) **EP 2 073 952 B1**
(45) Date of publication and mention of the grant of the patent: **16.02.2011**
(21) Application number: 07827657.3
(22) Date of filing: 03.09.2007
(51) Int. Cl.: B23Q 11/12, B23Q 11/00

(54) **THERMAL CONTROL OF AN OPERATING MACHINE THROUGH A SYSTEM FOR STORING THERMAL ENERGY BASED ON PHASE-CHANGE MATERIALS**
WÄRMESTEUERUNG EINER ARBEITSMASCHINE DURCH EIN SYSTEM ZUR SPEICHERUNG VON WÄRMEENERGIE AUF BASIS VON PHASENWECHSELMATERIALIEN
CONTRÔLE THERMIQUE D'UNE MACHINE DE COMMANDE PAR UN SYSTÈME DESTINÉ À STOCKER L'ÉNERGIE THERMIQUE À L'AIDE DE MATÉRIAUX EUTECTIQUES

(30) Priority: 09.10.2006 IT MI20061929
(43) Date of publication of application: 01.07.2009
(73) Proprietor: CE.S.I. Centro Studi Industriali di Taddei Ing. Franco & C. S.a.s., 20093 Cologno Monzese (MI) (IT)
(72) Inventor: TADDEI, Franco, 20093 Cologno Monzese (MI) (IT); MERLO, Angelo, 20093 Cologno Monzese (MI) (IT)
(74) Representative: Garavelli, Paolo
(86) International application number: PCT/IT2007/000603
(87) International publication number: WO 2008/044256

(56) References cited:
- EP-A- 0 003 442
- EP-A- 0 083 943
- DE-A1- 19 708 341
- JP-A- 6 096 343
- JP-A- 57 202 493

## Description

The present invention refers to a process to be adopted in the field of operating machines as regards their thermal control. Such process is based on the use of a system for storing thermal energy into phase-change materials (PCM) to protect an operating machine from thermal excursions due, for example, to heat generated by some internal components of the machine itself, or that can be generated by the outside environment.

Thermal excursion can in fact have a big impact on an operating machine operation. Such excursions imply structural thermal distortions that can generate such errors as to impair the quality of worked products or performed measures. In applications where such errors cannot be tolerated, it is therefore necessary to employ costly and complex active systems for compensating the thermal distortions.

As better described below, the process to which the present invention refers is an alternative to the use of the above mentioned active compensating systems, and consists in the passive thermal control of an operating machine through the use of at least one type of phase-change material.

### The phase-change materials

Phase-Change Materials (PCMs) are salts or organic compounds that are able to accumulate and release thermal energy as latent heat. The heat exchange occurs during a phase transition process, process in which energy storage or supply occurs not due to the effect of variations of the system mechanical structure (such as for example when water is heated at liquid state) but due to changes of chemical interactions inside the structure (such as when ice melts at 0 °C).

Phase-change materials are mostly used as accumulators of latent heat and the most widely known are the "*solid-liquid PCMs"* (with solid-liquid transition) and the "*dry PCMs*"*.*

*Solid-liquid PCMs* are materials that are subjected to a transition from solid phase to liquid phase by exchanging a high amount of thermal energy and keeping an almost constant temperature. When they are at the solid state, these materials accumulate heat like traditional materials: heat absorption implies the progressive temperature increase. When the melting temperature is reached, a phase change occurs and such materials go from their solid to their liquid state, accumulating thermal energy without heating. The temperature starts again rising when the phase change is ended, when the material is completely melted and the heat absorption continues.

The behaviour of *solid-liquid PCMs* is similar during the cooling process starting from their liquid phase. Heat accumulated by the material is released in the environment in a certain temperature range and the transition from liquid phase to solid phase occurs when the melting temperature is reached. During the crystallisation process, the phase-change material temperature remains constant.

*Dry PCMs,* similarly to *solid-liquid PCMs,* exchange much heat at an almost constant temperature during phase transitions. These materials however are subjected to a transition between two solid phases or are composite materials that encapsulate *solid-liquid PCMs* so that the solid-liquid phase transition is not evident.

*Dry PCMs* that change phase remaining at the solid state are mostly organic compounds. *Dry PCMs* that contain micro-encapsulated *solid-liquid PCMs* are instead composed of a matrix in which spheres are dispersed whose diameter ranges between 10 microns and 1 millimetre and equipped with a water-proof polymer wall whose thickness is less than one micron. Phase-change materials contained in such spheres are usually 80÷85% of the global composite mass.

Systems that use *solid-liquid PCMs* have problems dealing with liquid containment and their performance: when the phase-change material is in the liquid phase, they could be sensitive to system orientation and force of gravity. Such difficulties do not occur when using the *dry PCMs.*

Even if they can be used for other purposes, the phase-change materials are mostly used as systems for accumulating thermal energy. It is with such application that phase-change materials are used in the process described in the present invention.

In particular, the process application is made possible by exploiting two advantages offered by the use of phase-change materials: the fact that heat accumulation occurs under almost isothermal conditions and the high thermal capacity.

Water is an optimum material to which reference must be made to have an idea of the order of magnitude of heat that a material exchanges during a phase transition, with respect to heat exchanged under other circumstances (sensible heat). The necessary energy for melting 1 kg of ice at 0 °C is 333 kJ. By administering the same energy to 1 kg of water at 0 °C, its temperature rises up to 80°C.

The main disadvantage associated with the use of phase-change materials for accumulating thermal energy consists in their scarce conductivity. A scarce conductivity in fact is an obstacle to thermal energy accumulation.

In small-sized systems (such as micro-spheres in which phase-change materials are encapsulated in *dry PCMs*)*,* such defect is not a problem since the thermal exchange surface is large if compared with the system mass and this favours heat transmission.

In applications providing for the realisation of big-sized systems, the scarce thermal conductivity can impair heat storage efficiency during the phase transition. The system conductivity must therefore be increased and for such purpose highly conductive wings or matrixes are used, mostly mated of metal or graphite.

Also in the process of the present invention, the high conductivity of the system for storing thermal energy is guaranteed by using metal wings.

In addition to ice, more than 500 synthetic or natural materials are deemed as phase-change materials. Among these, there are hydrated salts, metals, alloys, poly-alcohols, eutectics and paraffin. These materials are different due to the temperature at which phase changes occurs and due to their thermal capacity.

Paraffin is the most widely known phase-change material. With respect to other phase-change materials, paraffin has high thermal energy storage capacity. Moreover, paraffin is not toxic, corrosive, or hygroscopic. Its thermal behaviour is stable even during a permanent use.

Paraffin is extremely economic since it derives from petroleum refining. This however implies as a disadvantage a scarce ignition resistance.

The following table (Wirtz R. A., Zheng N. and Chandra D., 1999) contains some characteristics of most representative phase-change materials.

| **Phase-change materials** | **Transition type** | **Phase transition temperature [°C]** | **Latent heat [J/cm³]** | **Density [kg/m³]** |
|---|---|---|---|---|
| Paraffin | S - L | -12 ÷ 71 | 128 ÷ 197 | 750 ÷ 880 |
| Organic compounds that are not paraffin | S - L | -13 ÷ 1 87 | 131 ÷ 438 | 850 ÷ 1540 |
| Hydrate salts | S - L | 28 ÷ 137 | 270 ÷ 650 | 1500 ÷ 2200 |
| Metals | S - L | 30 ÷ 125 | 200 ÷ 800 | 6000 ÷ 10000 |
| Solid-solid transition organic compounds | S-S | 21 ÷ 100 | 144 ÷ 212 | ∼ 1100 |
| Micro-encapsulated paraffin | S - L | 6 ÷ 101 | 95 ÷ 186 | ∼ 900 |

From the previous table, it is possible to observe that the properties of *dry PCMs* are comparable with those of paraffin. Hydrate salts and metals have higher latent heat with the same volume.

### State of the art

In the past, numerous patent applications have been filed related to the use of phase-change materials as regards thermal control by storing latent melting head.

Herein below, the most important projects studied in this context are briefly summarised.

### Patent DE1967009 (August 1976)

This patent deals with a panel containing a phase-change material allocated next to structural porosities or recesses of the same panel. The melting temperature of the phase-change material coincides with the mean temperature normally reached by the panel during a day.

This panel can be used in buildings or as thermal insulating material or heat accumulator.

### Patent EP0271118 (June 1988)

This patent deals with a panel called "thermo-wall", characterised by two skins enclosing a core with a honeycomb structure. The structure cells are filled with a phase-change material in order to give the panel a large thermal energy storage capacity. Among the preferred embodiments of the "thermo-wall", there are removable planes for a food-carrier trolley, walls of the same trolley, trays, plates, glasses and the like.

### Patent US5637389 (June 1997)

This patent deals with a thermal barrier composed of a foam in which micro-spheres are dispersed, that encapsulate a phase-change material. Micro-spheres are mutually separated and are anisotropically distributed in order to minimise the system thermal conductivity.

Such thermal barrier can be used for making footwear soles.

### Patent US5669584 (September 1997)

This patent deals with an apparatus for keeping a spacecraft at a constant temperature. Such system has a sandwich-type structure and must be applied next to the external surface of the spacecraft. The sandwich-type structure skins enclose compartments with cells with translucent walls containing phase-change materials. The outmost skin lets luminous radiations coming from the sun filtrate therein. Such radiations reach the cells and are absorbed by the phase-change material. Through the absorption and the radiation of thermal energy, the cells contribute to keep the temperature inside the spacecraft constant under light and darkness conditions.

Given the high thermal excursions to which spacecrafts are subjected, the cellular sandwich contains two types of phase-change material, at different melting temperatures. The first one has a melting temperature that is less than the maximum temperature that is normally reached by the spacecraft when it is exposed to the sun. The second one has a melting temperature greater than the minimum temperature that usually the spacecraft reaches when it is in darkness. The phase-change materials keep the spacecraft at one or the other melting temperature for long periods of time, according to the vehicle being exposed to light or being in darkness.

### Patent WO9846669 (October 1998)

This patent deals with a composite system composed of a foam with a configuration with at least partially open cells, drenched by a binder in which micro-spheres of a phase-change material are dispersed. The micro-spheres can be micro-encapsulated. According to the preferred embodiment of this invention, foam is made of polyester or of polyurethane and is cut into thin sheets; the phase-change material is a paraffin.

This patent further deals with two processes that can be used for making the above composite system.

The first process consists in dispersing the phase-change material micro-encapsulated in the binder and applying the thereby-obtained dispersion on the upper surface of the sheet of foam. By creating vacuum next to the lower surface, the dispersion permeates the foam from 20% to 100% of the volume.

The second process consists again in dispersing the phase-change material micro-encapsulated in the binder and applying the dispersion on the upper surface of the sheet of foam. The foam permeation is obtained by passing a slanted blade on such surface and exerting a suitable pressure next to the lower surface through a roller.

### Patent WO0061360 (October 2000)

This patent deals with a system composed of a foam inside which a medium is homogeneously dispersed, containing a non-micro-encapsulated phase-change material. The amount and type of medium to be used can be optimised for the thermal control and for obtaining desired cellular properties. The thereby obtained structure can be applied to all products for which a thermal control is required.

### Patent US6217993 (April 2001)

This patent deals with a thermal insulating system characterised by three layers. The first layer contains a high-density material in which micro-spheres are dispersed, into which a phase-change material is encapsulated. The second layer has a lower density and consists in a fibrous mesh containing micro-spheres in which a phase-change material is encapsulated. The third layer is extremely flexible.

This three-layer insulating system can be used for making garments.

### Patent WO02083440 (October 2002)

This patent deals with a thermal control process for a car compartment in order to save energy and increase the thermal comfort of the passengers. Such process provides for the insertion of phase-change materials with different melting temperatures in the roof, in the seats and in the dashboard panel of the car, in order to absorb, during the hottest months, the excess body heat and heat that penetrates from glasses. As regards the preferred embodiments, the phase-change materials are micro-encapsulated and dispersed in a matrix with a composed polymer or elastomer structure, or in a foam. When it is used in seats, the phase-change material is embedded in a fabric with spaced meshes, with a polymer structure. The thereby obtained composite materials have a high thermal capacity.

### Patent WO2005057119 (June 2005)

This patent deals with a phase-change heat exchanger for thermo-conditioning a fluid. The exchanger is equipped with ducts through which fluid flows, and with a foam in thermal contact with at least one duct. Foam has bindings interconnected in order to obtain a three-dimensional open-cell meshed structure. Foam is drenched with a phase-change material that receives thermal energy from the fluid through bindings present in the foam. DE-197 08 341 A1 and EP 0 083 943 A disclose systems according to the preamble of Claim 1.

The process of the present invention provides for the use of phase-change materials as regards the thermal control in the field of operating machines.

In such field, the thermal stability of the structures is an extremely critical matter. Heating due to mechanical or electrical members during an operating machine operation or temperature changes in the outside environment, create thermal fields that generate structural distorsions. Such distorsions are transformed into errors that, if not corrected, impair the quality of the worked piece of the performed measure.

When operating machines (for example machine tools, measuring machines or machines for very high accuracy mechanical working) are used, the compensation of such errors is often necessary and occurs mostly through active systems. Such systems correct the working or measuring position through the numeric control, depending on thermal error prediction performed through mathematical models (neural networks, multiple regression, etc.) that are extremely complex and often scarcely robust and unreliable. These models perform the prediction starting from current position and temperatures measured through sensors placed in suitable machine points.

The process of the present invention is an alternative solution to the problem of thermal distortions of an operating machine. Such process consists in a passive system for preventing or limiting distortions, based on the use of phase-change materials. A similar process is an innovation with respect to the current state of the art.

Current systems, in fact, are exclusively active and solve the problem of thermal distortions by compensating working or measuring errors created by them. Such systems namely operate on effects of such distortions instead of removing their causes. The process of the present invention instead aims to prevent that such distortions occur. This result is obtained by means of the iso-thermal absorption by at least one type of phase-change material, of the thermal energy that generates the above distortions (and therefore keeping the temperature of structural machine elements almost constant). With respect to current active systems, this process is extremely simple, efficient and relatively inexpensive.

The above and other objects and advantages of the invention, as will result from the following description, are obtained with a thermal control process as described in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:

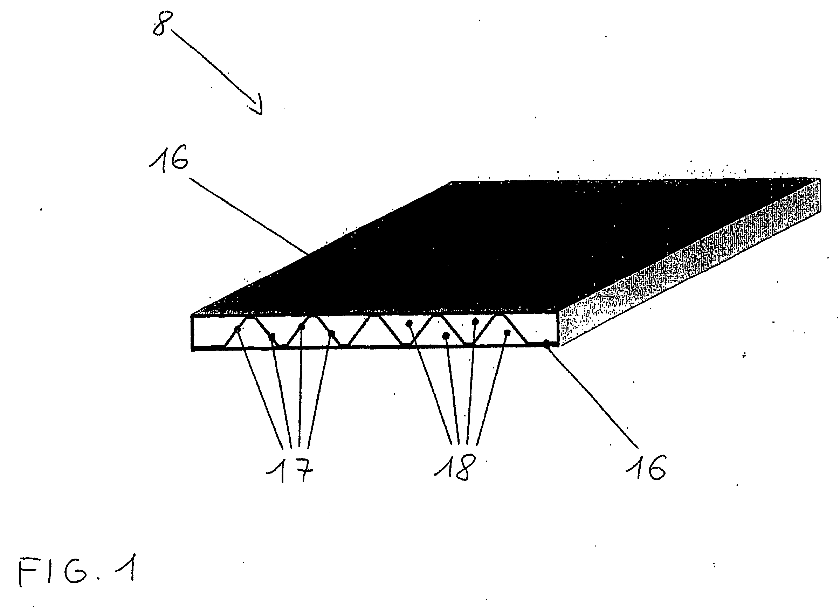

- Figure 1 shows a perspective view of a preferred embodiment of the system for storing thermal energy with phase-change materials, according to the present invention;

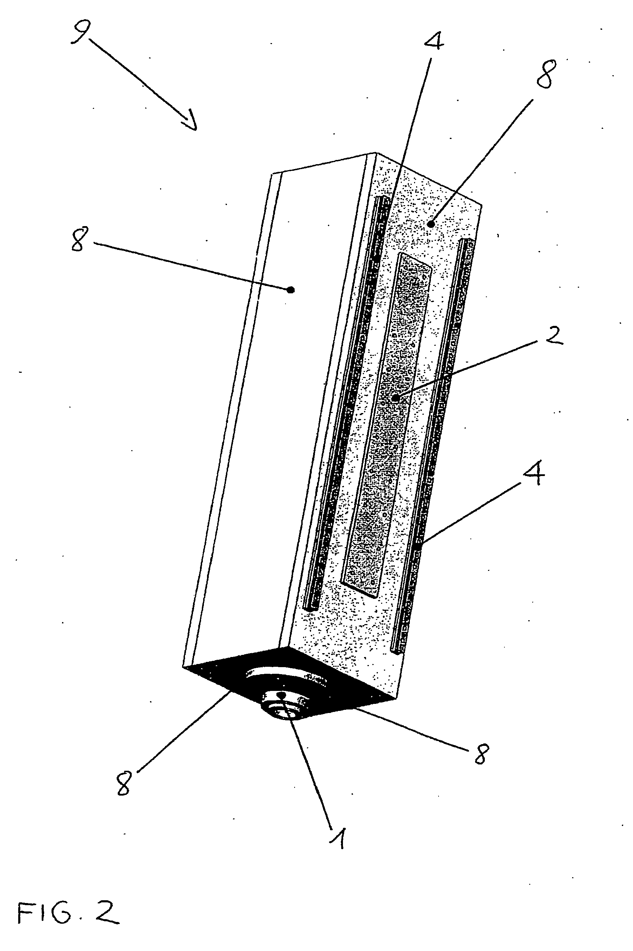

- Figure 2 shows a perspective view of a preferred embodiment of a component of a machine tool, obtained by assembling many systems as in Fig. 1;

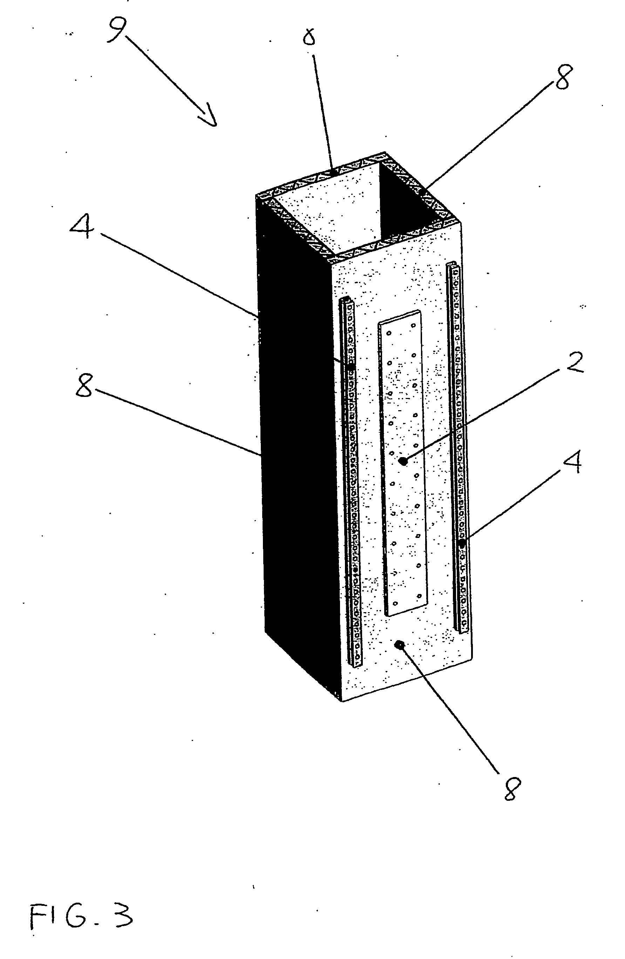

- Figure 3 shows another perspective view of the component of Fig. 2;

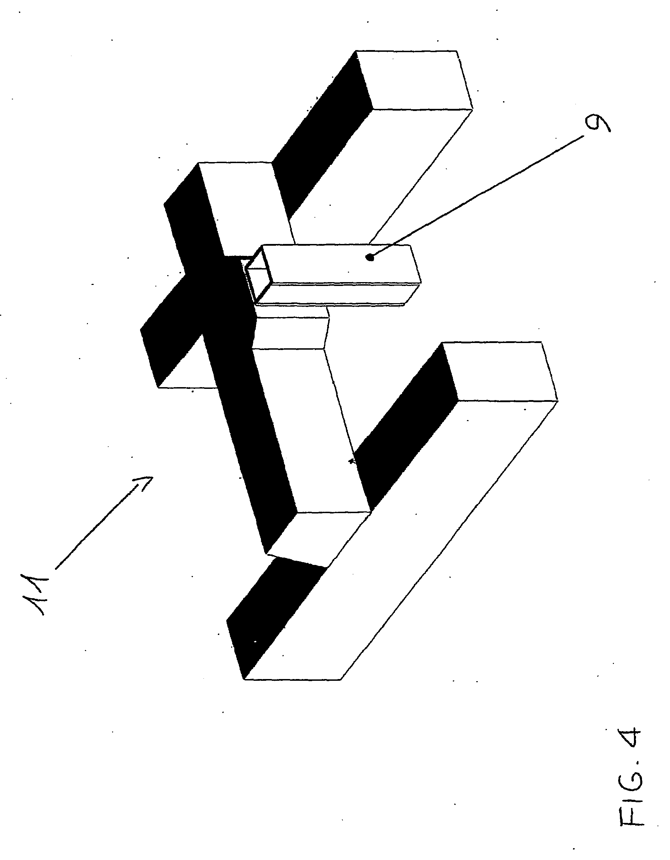

- Figure 4 shows a schematic view of a machine tool on which the component of Fig. 2 is assembled;

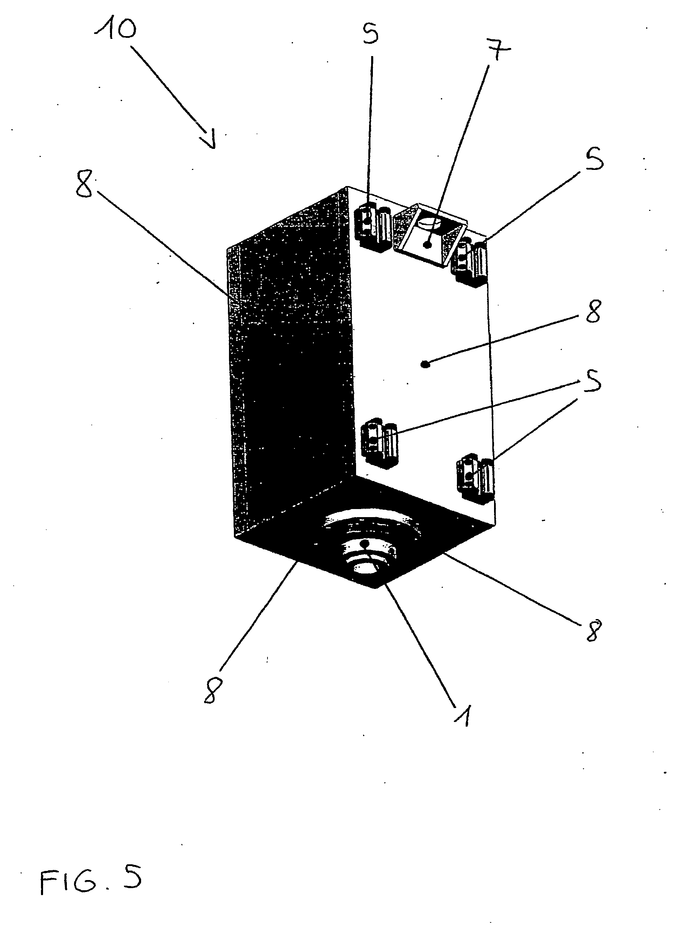

- Figure 5 shows a perspective view of a preferred embodiment of another component of a machine tool, obtained by assembling many systems as in Fig. 1;

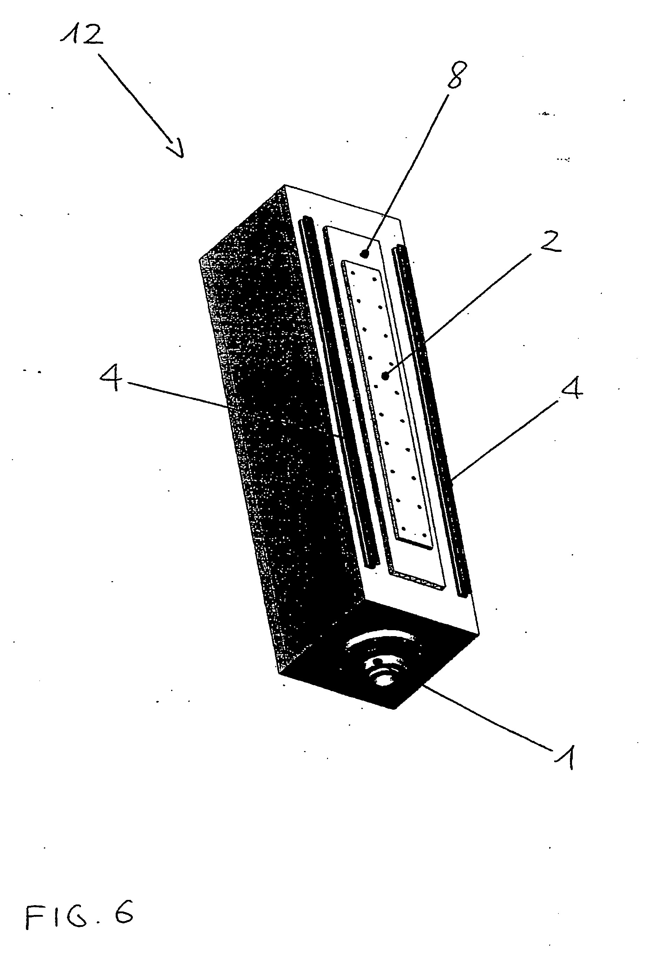

- Figure 6 shows a perspective view of a preferred embodiment of another component of a machine tool, containing the system of Fig. 1;

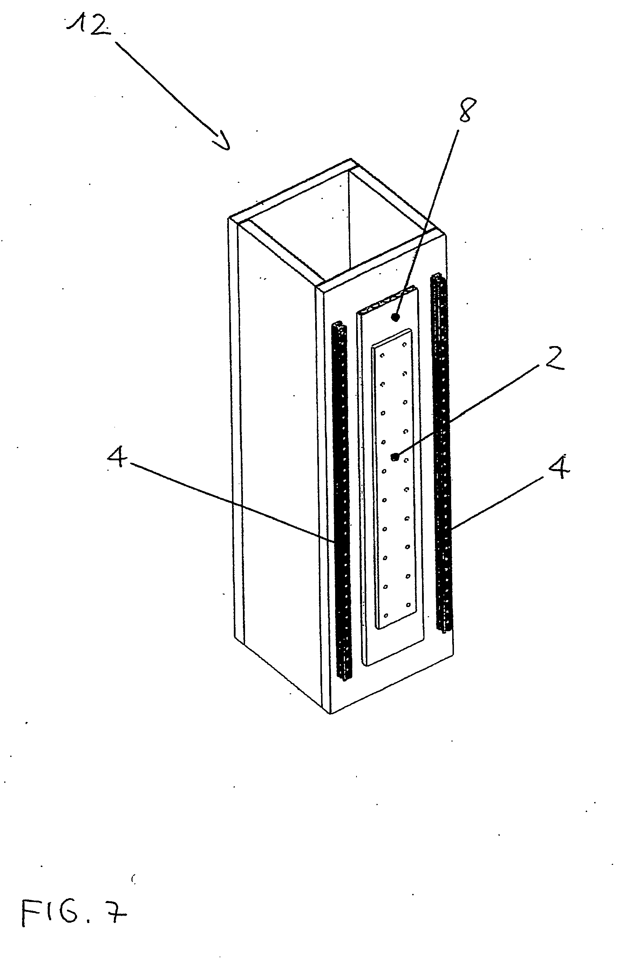

- Figure 7 shows another perspective view of the component of Fig. 6;

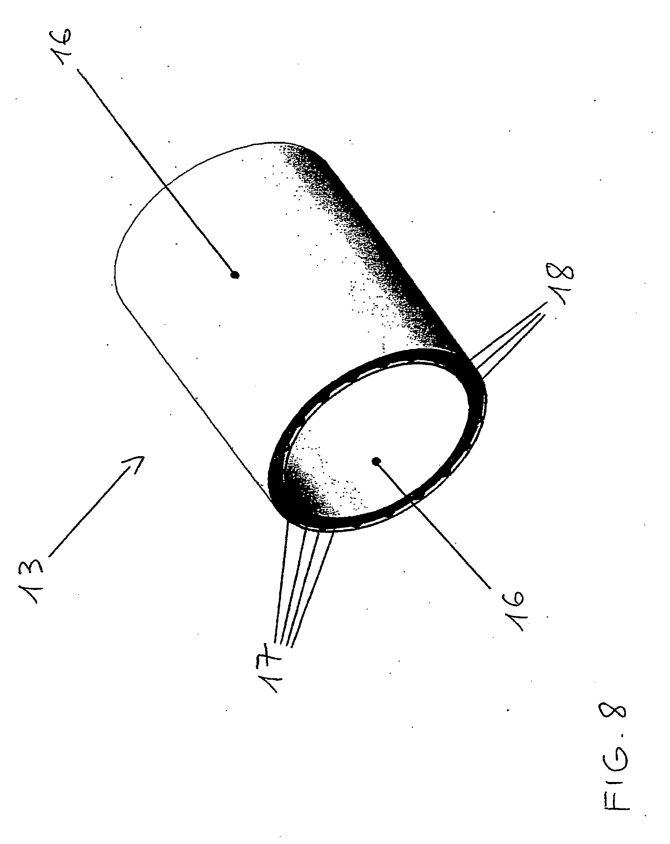

- Figure 8 shows a perspective view of another preferred embodiment of the system for storing thermal energy with phase-change materials, according to the present invention;

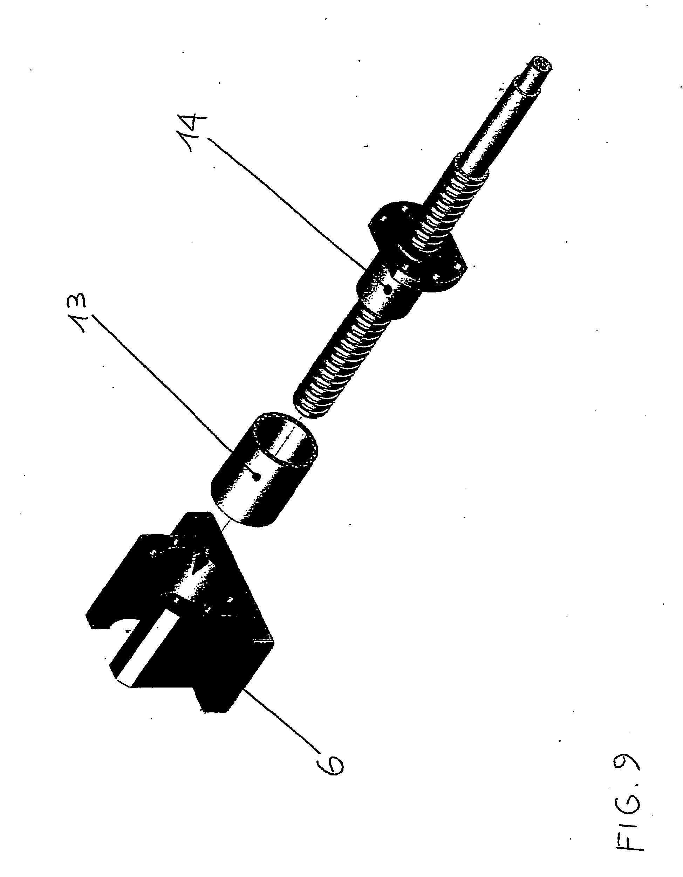

- Figure 9 shows a perspective view of how it is possible to interface two components of an operating machine through the component of Fig. 8;

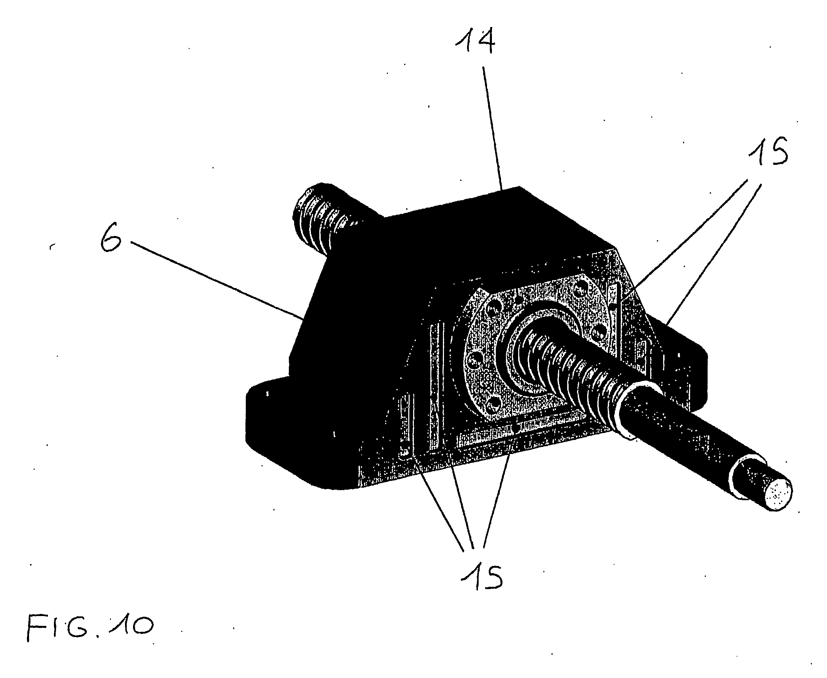

- Figure 10 shows a perspective view of a preferred embodiment of a component of an operating machine, containing another preferred embodiment of the system for storing thermal energy with phase-change materials according to the present invention;

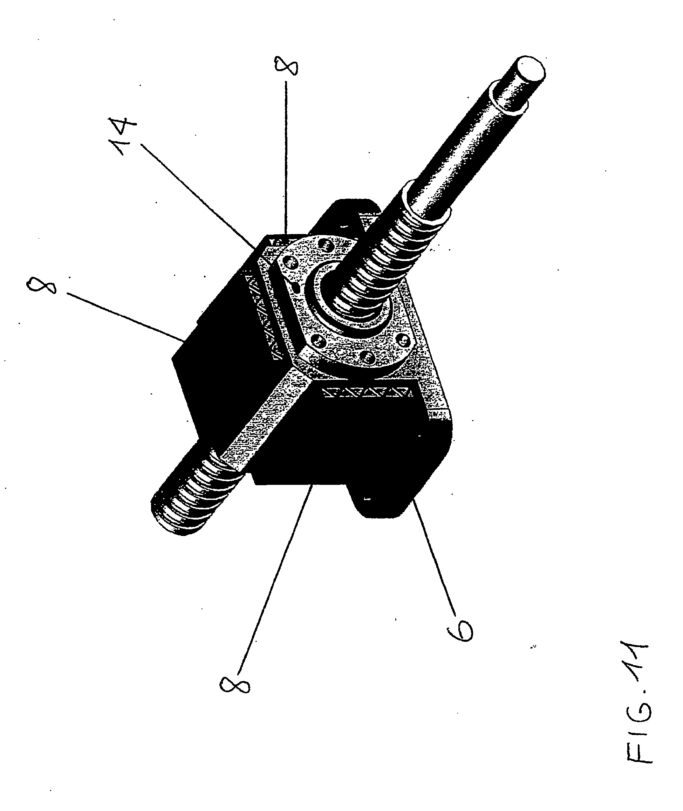

- Figure 11 shows a perspective view of a component of an operating machine, to which many systems as in Fig. 1 are applied;

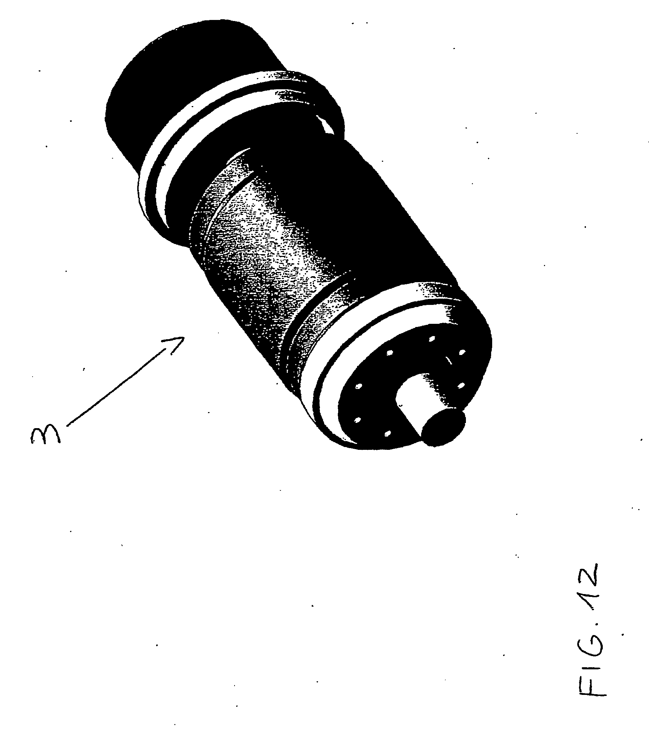

- Figure 12 shows a perspective view of a component of an operating machine;

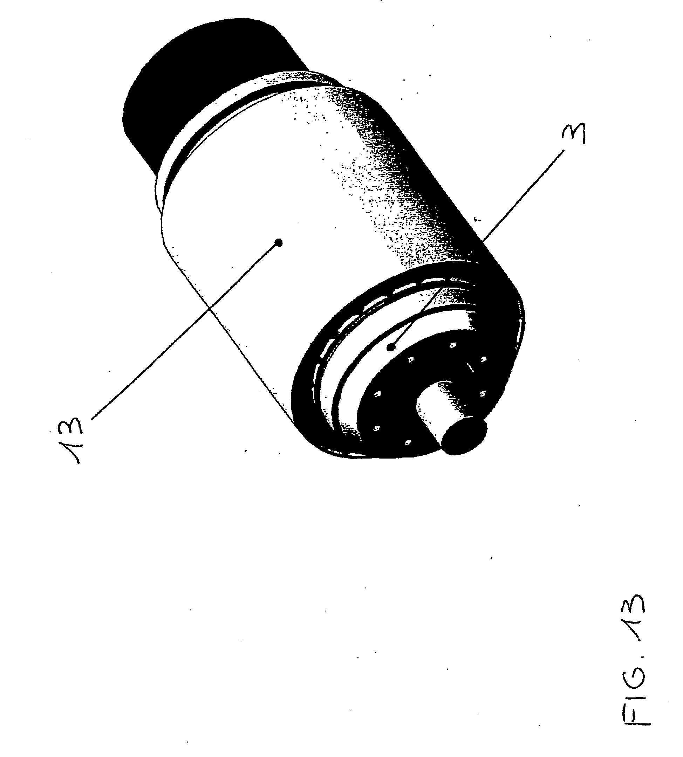

- Figure 13 shows a perspective view of the component of Fig. 12 encapsulated in the component of Fig. 8;

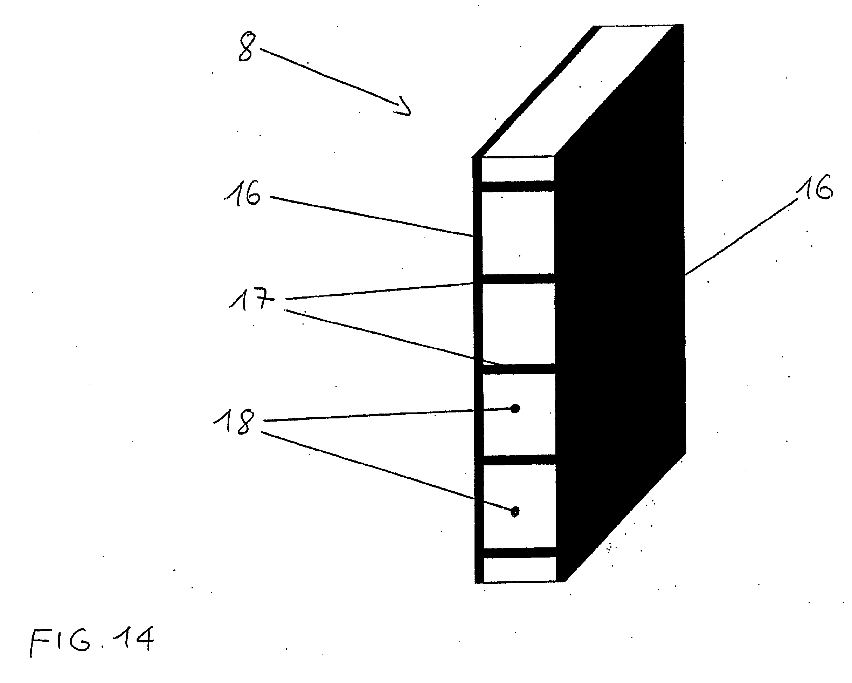

- Figure 14 shows a schematic view of the system of Fig. 1;
- Figure 15 shows a graphic representation of the behaviour in time of the temperature of the environment outside the system of Fig. 1; and
- Figure 16 shows a graphic representation of the behaviour in time of the surface temperature of the system of Fig. 1.

The thermal control of an operating machine performed according to the process to which the present invention refers, provides for three particular applications of a system for storing thermal energy with phase-change materials.

The first application consists in using a system for storing thermal energy with phase-change materials as structural element of an operating machine.

According to the process of the present invention, the system for storing thermal energy is used inside an operating machine as supporting structure to which it is possible to constrain the machine components that, for example next to power peaks, emit a large amount of heat, with the risk of generating thermal distortions in the structures of the surrounding machine.

The system for storing thermal energy absorbs heat coming from such components or from the outside environment. Till the temperature of the phase-change material contained in the storage system is lower than the melting temperature, the above system behaves as if it were composed of traditional materials, being heated with the progressive heat absorption. When the phase-change material reaches the melting temperature, such material is subjected to a transition from solid phase to liquid phase, absorbing heat under isothermal conditions. This makes the surface temperature of the system for storing thermal energy, when heat absorption proceeds, increase more slowly than it would occur in case of use of traditional materials. Moreover, if the heat flow between the system for storing thermal energy and the machine components or the outside environment is relatively low (for example, if heat transmission occurs through natural convection), the surface temperature of the system is kept almost constant during heat absorption.

The system for storing thermal energy, by absorbing head and limiting the surface temperature increase, therefore limits thermal jumps to which the other components of an operating machine could be subjected.

The second application of a system for storing thermal energy with phase-change materials according to the process to which the present invention refers, consists in using such system as thermal barrier to be used, for example, in an operating machine in order to prevent or limit its thermal distortions.

According to the process of the present invention, the system for storing thermal energy is used, inside an operating machine, as thermal insulation interface to be interposed between machine components that emit large amounts of heat, and other machine parts to be protected from thermal excursions that such heat emissions could generate.

Differently from what has been stated for the previous application, the system for storing thermal energy therefore is not used as structural element, but as interface between heat source members and adjacent structures. The operating principle of such system is however similar to what is described for the previous application: the system for storing thermal energy absorbs heat emitted by machine members adjacent to the system, limiting the surface temperature increase. Due to the high thermal conductivity and capacity, the system operates as thermal insulating material between the interfaced structures.

The third application of a system for storing thermal energy with phase-change materials according to the process to which the present invention refers, consists in using such system for increasing the thermal inertia of the components of an operating machine that emit large amounts of heat, or screening the functional machine parts that absorb such heat (not in direct contact with the source), in order to thermo-settle them.

Again, the scope consists in preventing or limiting the thermal distortions that such heat emissions could generate in the structures of the surrounding machines. The operating principle is based on heat absorption together with the containment of the temperature increase, according to what has been previously described.

If the component of this application is being developed, it is possible to increase the thermal inertia of the above component by providing, in the same component structure, some recesses to be filled by means of the system for storing thermal energy with phase-change materials. In such case, this application is a variation of the first, previously described application. Instead of providing the system for storing thermal energy as structural element of an operating machine, such system can be integrated in the same structure of the machine component, with the purpose of increasing its thermal inertia.

If the component whose thermal inertia has to be increased is an already existing component, it is possible to thermo-settle the above component and to limit the thermal jumps of surrounding structures by applying, for example, the system for storing thermal energy to the internal or external surface of the above component. Such application is a variation of the second, previously described application. Instead of using the system for storing thermal energy as thermal barrier through which a component that emits large amounts of heat is interfaced with the other adjacent structures, in this application such system operates as interface between the above component and the whole surrounding environment.

In above described applications, the material or types of phase-change material to be used in the system for storing thermal energy must be selected depending on melting temperature and latent melting heat, and must be used in suitable amounts, in order to obtain the desired thermo-settling effect.

The advantage deriving from the realisation of a system for storing thermal energy containing many phase-change materials with different melting temperatures (namely an hybrid system), consists in obtaining the thermo-settling effect on a wide range of temperatures. As previously described, in case of using a single phase-change material, during heat absorption before reaching the melting temperature, the phase-change material behaves as a traditional material, by being progressively heated. Instead, by realising an hybrid system, it is possible to select the phase-change materials so that, for example, when heating the phase-change materials that are already completely melted or still in their solid phase, there is at least one phase-change material for which the melting process occurs. The temperature increases of the system for storing thermal energy when absorbing head are limited during the melting process of each phase-change material. This ensures therefore a thermal control on a wider temperature range with respect to the use of a single phase-change material.

The hybrid solution, characterised by the use of many phase-change materials with different melting temperatures, can be adopted for each one of the three, above described applications.

As a non-limiting example, among the operating machines to which it is possible to apply the process of the present invention, there are machine tools, measuring machines, machines for high-accuracy mechanical working, robots and machinery in general.

In particular, among the machine tools, as an example, the following can be listed:
- milling machines for working dies and sculptured surfaces;
- working centres for working prism-shaped work-pieces;
- laser cutting machines;
- grinding machines;
- machines for working wood and plastic; .
- water-jet machines;
- punching machines.

Among the components of an operating machine that emit large amounts of heat, there are, as an example: process modules (for example an electro-spindle (1) that bears a cutting tool, or a measuring feeler), linear (2) and rotary (3) motors, sliding guides (4) or sliders (5) that slide on guides, screw-scroll system and related supports (6), bearings and related supports (7), possible linear and/or rotary members, and the like.

An example of application of the system for storing thermal energy as structural element of an operating machine, consists in making the above system shaped as a panel (8), as better described below, and in assembling many panels (8) so that a ram (9) or a head (10) of a machine tool (11) is realised, to which machine components are constrained that emit large amounts of heat (such as, for example, the previously mentioned components).

An example of use of the system for storing thermal energy as thermal interface barrier inside an operating machine, consists in using the above panel (8) for interfacing to a ram (12) of a machine tool, single machine components that emit large amounts of heat (such as, for example, the previously mentioned components). Another example consists in making the system for storing thermal energy shaped as a cylinder liner (13), as better described below, and in using such system as thermal interface between a scroll (14) of an operating machine and its own support (6). Such embodiment as cylinder liner (13) does not fall under the scope of the claimed invention.

An example of use of the system for storing thermal energy to increase the thermal inertia of components of an operating machine, consists in designing a scroll support (6) in order to provide it with recesses (15) in which the system for storing thermal energy can be inserted. Other examples consist in applying the system for storing thermal energy made as a panel (8) to external surfaces of a scroll support (6), or in encapsulating a rotary motor (3) in the system for storing thermal energy made as a cylinder liner (13). In both cases, the thermal inertia of the two components (6 and 3) would be increased.

Among the different shapes in which the system for storing thermal energy with phase-change materials can be realised, to be used for applying the process of the present invention, it is possible to adopt, for example, a panel (8) or a cylinder liner (13) with cellular structure, for example of the sandwich-type, composed of two metal skins (16) (for example, made of steel or aluminium) that enclose a core characterised by highly conductive, metal transverse wings (17) (for example, made of steel of aluminium). Such wings (17) mutually connect the skins (16) and create compartments (18) in which at least one type of phase-change material is allocated. The wings (17) are obtained, for example, by gluing or welding a corrugated metal sheet to the skins (16).

The adoption of a sandwich-type structure has several advantages.

From a thermal point of view, the presence of the transverse wings (17) ensures an optimum conductivity for the panel (8) or the cylinder liner (13). This requirement is fundamental to guarantee a good efficiency for the system in the process for storing thermal energy. The transverse wings (17) in fact increase the thermal exchange surface for the phase-change material. This is translated in a quicker heat transmission to such material and therefore a more efficient thermal energy absorption (or delivery).

The use of highly conductive transverse wings (17) further prevents thermal distortions inside the same panel (8) or cylinder liner (13). One of the major defects of the phase-change materials consists in their high thermal resistance. If there are no media or components that facilitate heat transmission inside the panel (8) or the cylinder liner (13), there is the risk that, between the two skins (16), such a temperature gradient is created as to distort the panel (8) or the cylinder liner (13). A similar phenomenon would impair, for example, the use of the system for storing thermal energy as structural element of an operating machine. To avoid such distortions, it is therefore suitable to connect the skins (16) through highly conductive wings (17).

The use of transverse wings (17) and, more in general, the use of a sandwich-type structure, finally implies advantages also from a purely mechanical point of view. The sandwich-type structures in fact have a high inertia and a low specific weight, such characteristics being extremely appreciated as regards the realisation, for example, of a mobile structural element.

The preferred embodiments of the system for storing thermal energy to be used for applying the process of the present invention, are also made different for the use mode of the phase-change material. In particular, with reference to the previously described panel (8) or cylinder liner (13), filling of the compartments (18) enclosed between the skins (16) and the wings (17) could occur, for example, through:
- at least one type of non-encapsulated phase-change material (for example, a paraffin);
- at least one type of micro-encapsulated phase-change material (for example, a paraffin) dispersed into a resin (for example, epoxy resin);
- at least one type of non-encapsulated phase-change material (for example, a paraffin) dispersed in a syntactic foam and to which it is linked through a binder.

For any one of the above mentioned filling modes, the use of many phase-change materials with different melting temperatures implies the realisation of a hybrid system for storing thermal energy that, as previously stated, ensures the thermal control of the parts on a very wide range of operating temperatures.

With reference to the previously described panel (8) or cylinder liner (13), the advantages and possible disadvantages associated with these three preferred embodiments are analysed herein below in detail.

In case of use of at least one type of non-encapsulated phase-change material, the amount of phase-change material that it is possible to insert in internal compartments (18) of the panel (8) or cylinder liner (13) is maximum. This characteristic is extremely advantageous if the thermal excursion to be compensated lasts for a long period of time. In fact, suppose, as an example, to employ a paraffin as phase-change material. Referring to this example, other conditions being the same, the greater the amount of paraffin present in the panel (8) or the cylinder liner (13), the higher the thermal capacity of the system. This is translated into a longer phase transition process. Therefore, the greater the amount of used paraffin, the longer the required time so that the phase transition completely occurs and the longer the time during which the panel (8) or the cylinder liner (13) are able to limit thermal jumps.

In case of use of solid-liquid phase transition materials, possible disadvantages connected to such embodiment could consist in problems for containing the phase-change material at its liquid state, and due to the dependence of panel (8) or cylinder liner (13) performance on system orientation with respect to the force of gravity.

Another preferred embodiment of the above mentioned system for storing thermal energy provides for filling the internal compartments (18) of the panel (8) or the cylinder liner (13) through at least one type of micro-encapsulated phase-change material dispersed in a resin matrix. As phase-change material it is possible, for example, to again use a paraffin; as resin, an epoxy resin. In the resin matrix, it is further possible to disperse hollow micro-spheres (for example, made of glass) to improve the mechanical properties of the system for storing thermal energy.

Such preferred embodiment therefore provides for the use of a *dry PCM.* In such a way, the containment of the phase-change material at its liquid state is not a problem and the behaviour of the system for storing thermal energy will not be affected by system orientation with respect to the force of gravity.

With respect to the previous embodiment, with the same panel (8) or cylinder liner (13) sizes, the amount of phase-change material contained in the system is lower. As previously stated, this can be translated into a shorter necessary time so that the phase transition completely occurs.

The other preferred embodiment of the above cited system for storing thermal energy again provides for the use of a *dry PCM.* In particular, the internal compartments (18) of the panel (8) or the cylinder liner (13) are filled through at least one type of non-encapsulated phase-change material, dispersed in a matrix of syntactic foam to which it is linked through a binder. Again, as phase-change material, it is possible, for example, to use a paraffin. The term syntactic foam means a three-phase system composed of resin, for example epoxy resin, in which hollow micro-spheres are dispersed, for example made of glass and/or alumina (Al₂O₃). The addition of alumina allows increasing the thermal conductivity of the system. This offers the advantage of decreasing possible temperature increases before melting of the phase-change material starts, and further allows better homogenising the thermal field on the system surface, thereby avoiding even small gradients that can generate structural distortions.

Though the phase-change material is not micro-encapsulated, the obtained composite can be considered a *dry PCM.* In fact, due to the use of a suitable binder, the phase-change material is linked to the hollow micro-spheres of the syntactic foam in order not to go out of the system when it is in its liquid phase. Moreover, the use of a syntactic foam makes the matrix free of recesses (namely air porosities) through which possible problems are solved that are connected to the volume expansion of the phase-change material during the melting process.

With respect to the previous embodiments, the use of a syntactic foam as matrix implies a further advantage from the mechanical point of view. Foams in fact confer optimum dampening properties. Using, for example, the panel (8) or the cylinder liner (13) as structural element for realising an operating machine, the best dampening properties generate a reduction of structure vibrations. This is extremely advantageous since such vibrations are, together with the thermal distortions, one of the main sources of error in high accuracy working.

Other preferred embodiments of the system for storing thermal energy coincide with the same three, above described filling systems to be inserted in internal compartments (18) of the panel (8) or the cylinder liner (13). Such fillers can namely be directly used as system for storing thermal energy. A possible application consists, for example, in placing these fillers in recesses suitably designed in a component of an operating machine to increase its thermal inertia.

As further proof of the validity of the process described in the present invention, the results are included below of a thermal analysis performed on a panel (8) that has a similar structure to the previously described one and is made according to one of the previously described preferred embodiments. Attention is focused on the temperature evolution in metal skins (16) that limit the panel (8). Due to the presence of transverse wings (17) inside the panel (8), the temperature in the two skins (16) is almost the same.

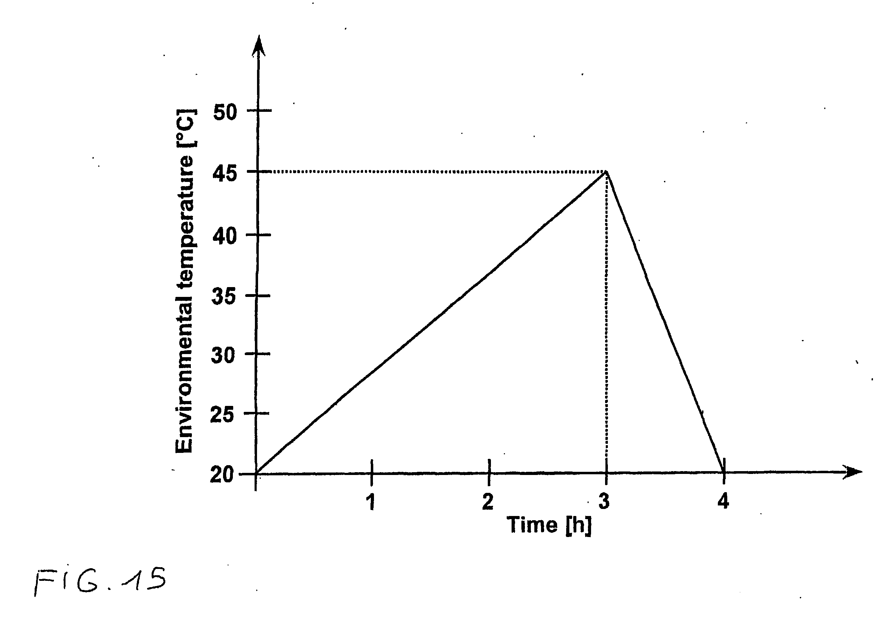

The environment outside the panel (8) can be the same as a heat sink whose temperature, as shown in Figure 15, linearly rises from 20 °C to 45 °C during the first hour and linearly decreases from 45 °C to 20 °C during the three following hours. Temperature evolution in the skins (16) of the panel (8) is therefore monitored for four hours.

The panel (8) temperature at the beginning is 20 °C.

Heat transmission between outside environment and skins (16) occurs due to natural convection.

Skins (16) and transverse wings (17) of the panel (8) are made of aluminium. Internal compartments (18) of the panel (8) are exclusively filled with a single, non-encapsulated phase-change material. Such material is a paraffin whose melting temperature is 25 °C.

Values assigned to geometric parameters of the panel (8) under analysis are included in the following table.

| | |
|---|---|
| **Height of panel (8) [mm]** | 1009 |
| **Length of panel (8) [mm]** | 12 |
| **Depth of panel (8) [mm]** | 1000 |
| **Thickness of skins (16) [mm]** | 1 |
| **Thickness of transverse wings (17) [mm]** | 1 |
| **Slanting of transverse wings (17) with respect to skins (16) [degrees]** | 90 |
| **Distance between two consecutive transverse wings (17) [mm]** | 15 |

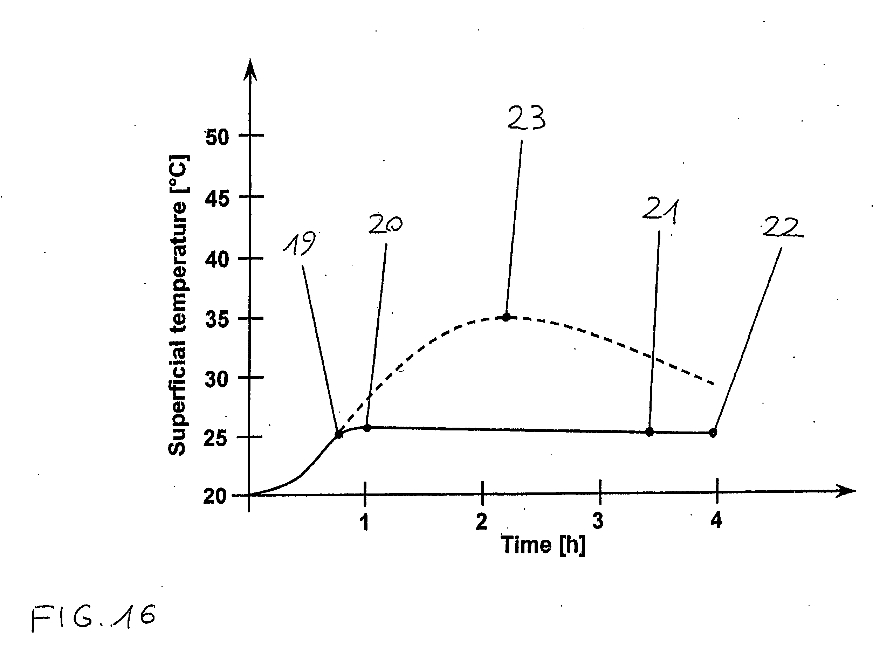

As shown in Figure 16, from the analysis it appears that the temperature of the skins (16) (shown by the solid line in Figure 16) rises by about 5.5 °C during the first three quarters of an hour, namely till the paraffin phase transition starts. After that (shown on the solid line with (19)), the panel (8) goes on absorbing heat till the temperature of the skins (16) is kept greater than the paraffin melting temperature. Such heat absorption occurs at an almost constant temperature of the skins (16). When the temperature of the skins (16) drops below the paraffin melting temperature (time shown on the solid line with (21)), the paraffin is not completely melted and the phase transition process is reversed. The paraffin contained in the system starts solidifying by emitting heat. Such heat, through the skins (16), is delivered to the environment outside the panel (8). Also during such emission, the temperature of the skins (16) of the panel (8) is kept almost constant.

Summarising, the temperature of the skins (16) is about 25.5 °C at the beginning of the phase transition (after three quarters of an hour, instant shown on the solid line as (19)), about 25.8 °C when the outside temperature is 45 °C (after one hour, instant shown on the solid line as (20)), about 24.8 °C at the end of the analysis (after four hours, instant shown on the solid line as (22)). The skins (16) are subjected to a thermal jump of about 1 °C in more than three hours.

Should the paraffin phase transition not occur, the temperature of the skins (16) (shown, under such hypothesis, by the dashed line in Figure 16) would instead reach, during the four hours, a temperature of about 35 °C (instant shown on the dashed line with (23)), with a thermal jump of about 10 °C from the time (shown on the solid line as (19)) in which paraffin, in the real system, starts melting.

## Claims

1. System for storing thermal energy adapted to carry out a passive thermal control process for an operating machine, said system for storing thermal energy containing at least one type of phase-change material, said process preventing or limiting the thermal distortions that generate working or measuring errors through the absorption of the thermal energy that generates such distortions, **characterised in that** said system for storing thermal energy is a rigid panel (8) equipped with reinforcing or stiffening means (17) and said phase-change material is allocated inside said panel (8), said panel (8) being delimited by two skins (16), said reinforcing or stiffening means (17) being a plurality of transverse wings (17), said skins (16) of said panel (8) enclosing a core containing said transverse wings (17) arranged in order to be connected to both said skins (16) to define internal compartments (18) of said panel (8), said phase-change material being inserted into said internal compartments (18) of said panel (8), said system being adapted to be used inside an operating machine either as supporting structure, or as thermal insulation interface interposed between machine components, or inserted in recesses designed in the structure of a component of the machine.

2. System for storing thermal energy according to claim 1, **characterised in that**, when said system is adapted to be used as supporting structure to which components of said machine that emit a large amount of heat are linked, said supporting structure, absorbing heat emitted by said components of said machine or coming from an environment outside said machine, is heated like a traditional material till said phase-change material reaches its melting temperature, and after having reached the melting temperature by said phase-change material, the surface temperature of said supporting structure, when absorbing heat, rising more slowly than what would happen in case of use of traditional materials, preventing said heat from generating distortions in surrounding structures of said machine.

3. System for storing thermal energy according to claim 1, **characterised in that**, when said system is adapted to be used as thermal insulating interface to be interposed between the components of said machine that emit large amounts of heat and other parts of said machine to be protected by thermal excursions that said heat emissions could generate, said thermal barrier, absorbing heat emitted by said components of said machine, is heated like a traditional material till said phase-change material reaches its melting temperature, and after said phase-change material has reached its melting temperature, a surface temperature of said thermal barrier, when absorbing heat, rising more slowly than what happens in case of use of traditional materials, preventing said heat from generating distortions in surrounding structures of said machine.

4. System for storing thermal energy according to claim 1, **characterised in that**, when said system is inserted in recesses designed in the structure of said component, said system is adapted to be used to increase a thermal inertia of the components of an operating machine that emit large amounts of heat, or for screening functional parts of said machine that absorb heat, said system for storing thermal energy being preferably applied onto internal or external surfaces of said component, said system for storing thermal energy, absorbing heat emitted by said component, being heated like a traditional material till said phase-change material reaches its melting temperature, and, after said phase-change material has reached its melting temperature, the temperature of said system for storing thermal energy, when absorbing heat, rising more slowly than what would happen in case of use of traditional materials.

5. System for storing thermal energy according to claim 1, **characterised in that** it contains a plurality of phase-change materials with different melting temperatures, and, when absorbing heat, simultaneously with heating said phase-change materials already completely melted or still in their solid phase, there is at least one phase-change material for which the melting process occurs.

6. Operating machine including a system for storing thermal energy according to claim 1 or 2, **characterised in that** said operating machine is a machine tool, or a measuring machine, or a machine for high accuracy mechanical working, or a robot, or a milling machine for working dies and prism-shaped work-pieces, or a working centre for working prism-shaped work-pieces, or a laser cutting machine, or a grinding machine, or a wood-working machine, or a water-jet machine, or a punching machine.

7. Component of an operating machine including a system for storing thermal energy according to claim 1, 3 or 4, **characterised in that** said component of said machine that emits large amounts of heat is a process module, said process module being preferably an electro-spindle (1) that holds a cutting tool, or a feeler in case of measuring machines, or **in that** said component of said machine that emits large amounts of heat is a linear motor (2), or a rotary motor (3), or a sliding guide (4), or a slider (5) that slides on a guide, or a screw-scroll system or its related support (6), or a bearing or its related support (7), or a linear member, or a rotary member.

8. Thermal control process adapted to be carried out by a system according to claim 1, **characterised in that** a plurality of said panels (8) are used for realising a ram (9) of a machine tool (11), to which said components of said machine (11) that emit large amounts of heat are linked, or a plurality of said panels (8) are used for realising a head (10) of a machine tool, to which said components of said machine that emit large amounts of heat are linked, or said panel (8) is used for interfacing to a ram (12) of a machine tool said components of said machine that emit large amounts of heat.

9. System for storing thermal energy according to claim 1, **characterised in that** said compartments (18) are filled with at least one type of non-encapsulated phase-change material, or said compartments (18) are filled with micro-spheres in which at least one type of phase-change material is encapsulated, dispersed in a matrix, or said compartments (18) are filled with micro-spheres in which at least one type of phase-change material is encapsulated and with hollow micro-spheres, both dispersed in a matrix, or said compartments (18) are filled with at least one type of non-encapsulated phase-change material and a binder, both dispersed in a matrix.

10. Thermal control process adapted to be carried out by a system according to claim 9, **characterised in that** said phase-change material is a paraffin, or an epoxy resin, or a syntactic foam, said syntactic foam being preferably a multi-phase system composed of hollow micro-spheres dispersed in a resin, said phase-change material being preferably linked through said binder to said hollow micro-spheres of said syntactic foam, said hollow micro-spheres being preferably made of glass or alumina.

## Patentansprüche

1. System für die Speicherung der Wärmeenergie, das dazu dient, ein passives Wärmekontrollverfahren für eine Arbeitsmaschine auszuführen, das genannte System für die Speicherung von Wärmeenergie enthält mindestens einen Phasenänderungsmaterialtyp, das genannte Verfahren verhindert oder begrenzt den Wärmeverzug, der Betriebs- oder Messfehler erzeugt, durch die Aufnahme der Wärmeenergie, die einen solchen Verzug erzeugt, und ist **dadurch gekennzeichnet, dass** das genannte System für die Speicherung von Wärmeenergie ein festes Paneel (8) ist, das mit Verstärkungs- oder Befestigungsvorrichtungen (17) ausgestattet ist, und das genannte Phasenänderungsmaterial ist intern im genannten Paneel (8) untergebracht, das genannte Paneel (8) wird durch zwei Filme (16) begrenzt, die genannten Verstärkungs- oder Befestigungsvorrichtungen (17) sind mehrere Querrippen (17), die genannten Filme (16) des genannten Paneels (8) schließen einen Kern ein, der die genannten Querrippen (17) einschließt, die so angeordnet sind, dass sie mit den beiden genannten Filmen (16) verbunden werden, um interne Felder (18) des genannten Paneels (8) abzugrenzen, das genannte Phasenänderungsmaterial wird in die genannten internen Felder (18) des genannten Paneels (8) eingesetzt, das genannte System dient dazu, in einer Arbeitsmaschine als Trägerstruktur oder als Schnittstelle zur Wärmeisolierung zwischen den Maschinenbauteilen verwendet zu werden, oder in Hohlräume eingesetzt zu werden, die in der Struktur eines Maschinenbauteils entwickelt wurden.

2. System für die Speicherung von Wärmeenergie gemäß Patentanspruch 1, das **dadurch gekennzeichnet ist, dass** die genannte Trägerstruktur, wenn das genannte System dazu dient, als Trägerstruktur verwendet zu werden, mit der Bauteile der genannten Maschine verbunden sind, die eine große Wärmemenge abgeben, Wärme aufnimmt, die von den genannten Bauteilen der genannten Maschine abgegeben wird oder von einer Umgebung außerhalb der Maschine kommt, und wie herkömmliches Material erhitzt wird, bis das genannte Phasenänderungsmaterial seine Schmelztemperatur erreicht, und nachdem es die Schmelztemperatur durch das genannte Phasenänderungsmaterial erreicht hat, erhöht sich die Oberflächentemperatur der genannten Trägerstruktur, wenn diese Wärme aufnimmt, langsamer als es bei Verwendung von herkömmlichen Materialien erfolgen würde, sodass verhindert wird, dass die genannte Wärme einen Wärmeverzug der umliegenden Strukturen der genannten Maschine erzeugt.

3. System für die Speicherung von Wärmeenergie gemäß Patentanspruch 1, das **dadurch gekennzeichnet ist, dass** die genannte Wärmeschranke, wenn das genannte System dazu dient, als Schnittstelle für die Wärmeisolierung verwendet zu werden, das zwischen die Bauteile der genannten Maschine gesteckt wird, die eine große Wärmemenge abgeben, und andere Teile der genannten Maschine, die durch Temperaturschwankungen geschützt werden müssen, die die genannten Wärmeemissionen erzeugen könnten, wie herkömmliches Material erhitzt wird, bis das genannte Phasenänderungsmaterial seine Schmelztemperatur erreicht, und nachdem es die Schmelztemperatur durch das genannte Phasenänderungsmaterial erreicht hat, erhöht sich die Oberflächentemperatur der genannten Wärmeschranke, wenn diese Wärme aufnimmt, langsamer als es bei Verwendung von herkömmlichen Materialien erfolgen würde, sodass verhindert wird, dass die genannte Wärme einen Wärmeverzug der umliegenden Strukturen der genannten Maschine erzeugt.

4. System für die Speicherung von Wärmeenergie gemäß Patentanspruch 1, das **dadurch gekennzeichnet ist, dass** das genannte System, wenn das genannte System in Hohlräume eingesetzt wird, die in der Struktur des genannten Bauteils entwickelt wurden, dazu dient, verwendet zu werden, um die Wärmeträgheit der Bauteile einer Arbeitsmaschine zu erhöhen, die eine große Wärmemenge abgeben, oder zur Abschirmung der Betriebsteile der genannten Maschine, die Wärme aufnehmen, das genannte System zur Lagerung von Wärmeenergie wird vorzugsweise an internen oder externen Oberflächen des genannten Bauteils verwendet, das genannte System zur Lagerung von Wärmeenergie nimmt die vom genannten Bauteil abgegebene Wärme auf, das wie ein herkömmliches Material erhitzt wird, bis das genannte Phasenänderungsmaterial seine Schmelztemperatur erreicht, und nachdem das Phasenänderungsmaterial seine Schmelztemperatur erreicht hat, erhöht sich die Temperatur des genannten Systems zu Speicherung von Wärmeenergie, wenn es Wärme aufnimmt, langsamer als es bei Verwendung von herkömmlichen Materialien erfolgen würde.

5. System für die Speicherung von Wärmeenergie gemäß Patentanspruch 1, das **dadurch gekennzeichnet ist, dass** es mehrere Phasenänderungsmaterialien mit unterschiedlichen Schmelztemperaturen enthält, und wenn es Wärme aufnimmt, existiert gleichzeitig zur Erhitzung der genannten Phasenänderungsmaterialien, die schon geschmolzen sind oder sich noch in der festen Phase befinden, mindestens ein Phasenänderungsmaterial, für das das Schmelzverfahren erfolgt.

6. Arbeitsmaschine, die ein System zur Speicherung der Wärmeenergie gemäß Patentanspruch 1 oder 2 enthält und durch die Tatsache **gekennzeichnet** ist, dass die genannte Arbeitsmaschine eine Werkzeugmaschine oder eine Messeinheit oder eine Maschine für hochpräzise mechanische Bearbeitungen oder ein Roboter oder eine Fräsmaschine für die Bearbeitung von Formen und prismatischen Formteilen oder ein Arbeitszentrum für die Bearbeitung von prismatischen Formteilen oder eine Laserschnittmaschine oder eine Schleifmaschine oder eine Holzbearbeitungsmaschine oder eine Wasserstrahlmaschine oder eine Lochstanze ist.

7. Bauteil einer Arbeitsmaschine mit einem System zur Speicherung von Wärmeenergie gemäß Patentanspruch 1, 3 oder 4, das **dadurch gekennzeichnet ist, dass** das genannte Bauteil der genannten Maschine, das eine große Wärmemenge abgibt, ein Prozessmodul ist, das genannte Prozessmodul ist vorzugsweise eine Elektrospindel (1), die ein Schnittwerkzeug enthält, oder einen Taster im Falle einer Messeinheit, oder **dadurch**, dass das genannte Bauteil der genannten Maschine, das eine große Wärmemenge abgibt, ein Linearmotor (2) oder ein Drehmotor (3) oder eine Gleitführung (4) oder ein Schieber (5) ist, der auf einer Führung gleitet, oder ein Schraubschneckensystem oder sein verbundener Träger (6) oder ein Lager oder sein verbundener Träger (7) oder ein lineares Element oder ein Drehelement.

8. Wärmekontrollverfahren, das dazu dient, von einem System gemäß Patentanspruch 1 ausgeführt zu werden und **dadurch gekennzeichnet ist, dass** mehrere der genannten Paneele (8) verwendet werden, um den Stößel (9) einer Werkzeugmaschine (11) zu realisieren, mit dem die genannten Bauteile der genannten Maschine (11) verbunden sind, die eine große Wärmemenge abgeben, oder mehrere der genannten Paneele (8) verwendet werden, um den Kopf (10) einer Werkzeugmaschine zu realisieren, mit dem die genannten Bauteile der genannten Maschine verbunden sind, die eine große Wärmemenge abgeben, oder das genannte Paneel (8) verwendet wird, um eine Schnittstelle mit dem Stößel (12) einer Werkzeugmaschine zu realisieren, deren Bauteile eine große Wärmemenge abgeben.

9. System zur Speicherung von Wärmeenergie gemäß Patentanspruch 1, das **dadurch gekennzeichnet ist, dass** die genannten Felder (18) mit mindestens einem nicht eingekapselten Phasenänderungsmaterialtyp gefüllt sind, oder die genannten Felder (18) mit Mikrosphären gefüllt sind, in denen mindestens ein Phasenänderungsmaterialtyp eingekapselt ist, der in einer Matrize verteilt ist, oder die genannten Felder (18) mit Mikrosphären gefüllt sind, in denen mindestens ein Phasenänderungsmaterialtyp mit hohlen Mikrosphären eingekapselt ist, die beide in einer Matrize verteilt sind, oder die genannten Felder (18) mit mindestens einem nicht eingekapselten Phasenänderungsmaterialtyp und einem Bindemittel gefüllt sind, die beide in einer Matrize verteilt sind.

10. Wärmekontrollverfahren, das dazu dient, durch ein System gemäß Patentanspruch 9 ausgeführt zu werden, und **dadurch gekennzeichnet ist, dass** das genannte Phasenänderungsmaterial ein Paraffin oder ein Epoxydharz oder ein syntaktischer Schaumstoff ist, der genannte syntaktische Schaumstoff ist vorzugsweise ein Mehrphasensystem, das aus in einem Schaumstoff verteilten hohlen Mikrosphären zusammengesetzt ist, das genannte Phasenänderungsmaterial wird vorzugsweise durch das genannte Bindemittel mit den genannten hohlen Mikrosphären des genannten syntaktischen Schaumstoffs verbunden, die genannten hohlen Mikrosphären werden vorzugsweise aus Glas oder Aluminiumoxid hergestellt.

## Revendications

1. Système pour emmagasiner l'énergie thermique apte à exécuter un processus de contrôle thermique passif pour une machine opératrice, ledit système pour emmagasiner de l'énergie thermique contenant au moins un type de matériel à variation de phase, ledit processus empêchant ou limitant les distorsions thermiques qui créent des erreurs d'exploitation ou de mesure à travers l'absorption de l'énergie thermique qui crée ces distorsions, **caractérisé par le fait que** ledit système pour emmagasiner l'énergie thermique est un panneau rigide (8) doté de moyens de renfort ou de raidissement (17) et ledit matériel à variation de phase est logé à l'intérieur du dit panneau (8), ledit panneau (8) étant limité par deux pellicules (16), lesdits moyens de renfort ou raidissement (17) étant une pluralité d'ailettes transversales (17), lesdites pellicules (16) dudit panneau (8) refermant un noyau contenant les dites ailettes transversales (17) disposées dans le but d'être connectées aux deux pellicules (16) pour définir des compartiments internes (18) dudit panneau (8), ledit matériel à variation de phase étant inséré dans lesdits compartiments internes (18) dudit panneau (8), ledit système étant apte à être utilisé à l'intérieur d'une machine opératrice comme structure de support, ou comme interface d'isolement thermique interposée entre des composants de machine, ou inséré dans des cavités projetées dans la structure d'un composant de la machine.

2. Système pour emmagasiner de l'énergie thermique selon la revendication 1, **caractérisé par le fait que**, quand ledit système est apte à être utilisé comme structure de support auquel sont liés des composants de ladite machine qui émettent une grande quantité de chaleur, ladite structure de support, en absorbant la chaleur émise par lesdits composants de la machine ou provenant d'un environnement à l'extérieur de ladite machine, est réchauffée comme un matériel traditionnel jusqu'à ce que ledit matériel à variation de phase atteigne sa température de fusion, et après avoir atteint la température de fusion au moyen dudit matériel à variation de phase, la température superficielle de ladite structure de support, quand elle absorbe chaleur, en augmentant plus lentement par rapport au cas d'utilisation de matériels traditionnels, en empêchant que ladite chaleur crée une distorsion dans les structures environnantes de ladite machine.

3. Système pour emmagasiner de l'énergie thermique selon la revendication 1, **caractérisé par le fait que**, quand ledit système est apte à être utilisé comme interface d'isolement thermique à interposer entre les composants de ladite machine qui émettent de grandes quantités de chaleur et d'autres parties de ladite machine à protéger au moyen d'excursions thermiques que lesdites émissions de chaleur pourraient générer, ladite barrière thermique, en absorbant la chaleur émise par les dits composants de ladite machine, est réchauffée comme un matériel traditionnel jusqu'à ce que ledit matériel à variation de phase atteigne sa température de fusion, et après que ledit matériel à variation de phase a atteint sa température de fusion, la température superficielle de ladite barrière thermique, quand elle absorbe de la chaleur, en augmentant plus lentement par rapport au cas d'utilisation de matériels traditionnels, en empêchant à la dite chaleur de créer des distorsions dans les structures environnantes de ladite machine.

4. Système pour emmagasiner de l'énergie thermique selon la revendication 1, **caractérisé par le fait que**, quand ledit système est inséré dans des cavités projetées dans la structure dudit composant, ledit système est apte à être utilisé pour augmenter l'inertie thermique des composants d'une machine opératrice qui émettent de grandes quantités de chaleur, ou pour protéger des parties fonctionnelles de ladite machine qui absorbent de la chaleur, ledit système pour emmagasiner de l'énergie thermique étant appliqué de préférence sur les surfaces interne ou externe dudit composant, ledit système pour emmagasiner l'énergie thermique en absorbant la chaleur émise par ledit composant, en étant réchauffé comme un matériel traditionnel jusqu'à ce que ledit matériel à variation de phase atteigne sa température de fusion, et, après que ledit matériel à variation de phase a atteint sa température de fusion, la température dudit système pour emmagasiner de l'énergie thermique, quand il absorbe de la chaleur, en augmentant plus lentement par rapport au cas d'utilisation de matériels traditionnels.

5. Système pour emmagasiner de l'énergie thermique selon la revendication 1, **caractérisé par** le fait de contenir une pluralité de matériels à variation de phase avec des températures de fusion différentes et, quand il absorbe de la chaleur, simultanément au réchauffage des dits matériels à variation de phase déjà complètement fondus ou encore dans leur phase solide, il existe au moins un matériel à variation de phase pour lequel a lieu le processus de fusion.

6. Machine opératrice comprenant un système pour emmagasiner de l'énergie thermique selon la revendication 1 ou 2, **caractérisée par le fait que** ladite machine opératrice est une machine outil, ou une machine de mesure, ou une machine pour usinages mécaniques à haute précision, ou un robot, ou une machine fraiseuse pour travailler des moules et des pièces de forme prismatique, ou un centre d'usinage pour travailler des pièces de forme prismatique, ou une machine de coupe laser, ou une machine meuleuse, ou une machine de travail du bois, ou une machine à jet d'eau, ou une poinçonneuse.

7. Composant d'une machine opératrice comprenant un système pour emmagasiner de l'énergie thermique selon la revendication 1, 3 ou 4, **caractérisé par le fait que** le dit composant de ladite machine qui émet de grandes quantités de chaleur est un module de processus, ledit module de processus étant de préférence un électro-mandrin (1) qui tient un outil de coupe, ou un tâteur dans le cas de machines de mesure, ou **par le fait que** ledit composant de ladite machine qui émet de grandes quantités de chaleur est un moteur linéaire (2) ou un moteur rotatif (3) ou un coulisseau (4), ou un curseur (5) qui glisse sur un coulisseau, ou un système à vis d'Archimède ou son support corrélé (6) ou un coussinet ou son support corrélé (7) ou un organe linéaire, ou un organe rotatif.

8. Processus de contrôle thermique apte à être exécuté par un système selon la revendication 1, **caractérisé par le fait qu'**est utilisée une pluralité de panneaux (8) pour réaliser un chariot (9) d'une machine outil (11), auquel sont reliés les dits composants de ladite machine (11) qui émettent de grandes quantités de chaleur, ou une pluralité des dits panneaux (8) sont utilisés pour réaliser une tête (10) d'une machine outil, à laquelle sont raccordés lesdits composants de ladite machine qui émettent de grandes quantités de chaleur, ou ledit panneau (8) est utilisé pour s'interfacer avec un chariot (12) d'une machine outil dont les composants émettent de grandes quantités de chaleur.

9. Système pour emmagasiner de l'énergie thermique selon la revendication 1, **caractérisé par le fait que** les dits compartiments (18) sont remplis par au moins un type de matériel à variation de phase non encapsulé, ou lesdits compartiments (18) sont remplis avec des microsphères dans lesquelles est encapsulé au moins un type de matériel à variation de phase, dispersé dans une matrice, ou les dits compartiments (18) sont remplis avec des microsphères dans lesquelles est encapsulé au moins un type de matériel à variation de phase et avec microsphères creuses, les deux dispersées dans une matrice, ou lesdits compartiments (18) sont remplis avec au moins un type de matériel à variation de phase non encapsulé et un liant, tous deux dispersés dans une matrice.

10. Processus de contrôle thermique apte à être exécuté par un système selon la revendication 9, **caractérisé par le fait que** ledit matériel à variation de phase est une paraffine, ou une résine époxydique, ou un expansé syntactique, ledit expansé syntactique étant de préférence un système multi-phase composé de microsphères creuses dispersées dans une résine, ledit matériel à variation de phase étant de préférence relié à travers ledit liant aux dites microsphères creuses dudit expansé syntactique, lesdites microsphères creuses étant faite de préférence en verre ou oxyde d'aluminium.
